# FASCICULE DE BREVET EUROPEEN

(11) **EP 2 296 916 B1**
(45) Date de publication et mention de la délivrance du brevet: **24.10.2012**
(21) Numéro de dépôt: 09772143.5
(22) Date de dépôt: 30.06.2009
(51) Int. Cl.: B60C 1/00, C08K 5/00, C08L 9/02

(54) **PNEUMATIQUE DONT LA BANDE DE ROULEMENT COMPORTE UN ELASTOMERE SNBR**
REIFEN MIT EINEM PROFIL MIT SNBR-ELASTOMER
TIRE WITH A TREAD COMPRISING AN SNBR ELASTOMER

(30) Priorité: 04.07.2008 FR 0854565
(43) Date de publication de la demande: 23.03.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LOPITAUX, Garance, F-03330 Valignat (FR); VASSEUR, Didier, F-63100 Clermont-Ferrand (FR)
(74) Mandataire: Ribière, Joel
(86) Numéro de dépôt international: PCT/EP2009/004714
(87) Numéro de publication internationale: WO 2010/000443

(56) Documents cités:
- EP-A- 0 366 915
- EP-A- 0 736 399
- EP-A- 1 544 238
- WO-A-03/078475
- WO-A-2004/044052
- WO-A-2007/070053
- WO-A-2007/070063
- US-A1- 2001 051 685
- US-A1- 2005 209 413

## Description

La présente invention se rapporte aux bandes de roulement de pneumatiques et aux compositions de caoutchouc utilisables dans ces bandes de roulement de pneumatiques.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" *(Highly Dispersible Silica),* capables de rivaliser, du point de vue du pouvoir renforçant, avec les noirs de carbone conventionnels de grade pneumatique.

L'amélioration des propriétés d'adhérence reste cependant une préoccupation constante des concepteurs de pneumatiques.

Poursuivant leurs recherches, les Demanderesses ont découvert une bande de roulement de formulation nouvelle, comportant un faible taux d'un SNBR spécifique, qui permet d'obtenir des pneumatiques présentant une adhérence sur sol mouillé et une résistance au roulement toutes deux améliorées.

Ainsi, un premier objet de l'invention concerne un pneumatique comportant une bande de roulement comprenant une composition de caoutchouc comportant au moins :
- à titre de premier élastomère diénique, entre 5 et 25 pce d'un terpolymère de styrène-nitrile-butadiène (SNBR) ayant une teneur en monomère nitrile entre 4 et 18. % en poids ;
- un second élastomère diénique autre que SNBR ;
- une charge renforçante ;
- un plastifiant liquide dont la température de transition vitreuse (Tg) est inférieure à -20 °C.

Il était certes déjà connu d'utiliser des élastomères SNBR dans des bandes de roulement de pneumatiques pour améliorer certaines de leurs propriétés d'usage, comme décrit par exemple dans les documents brevet EP 0 366 915, EP 0 537 040 ou US 5 225 479, EP 0 736 399 ou US 5 859 115.

Toutefois, on a constaté que l'utilisation de taux élevés de SNBR, comme décrit dans l'art antérieur ci-dessus, risque d'augmenter la rigidité des bandes de roulement de pneumatiques et de pénaliser leurs compromis de propriétés, particulièrement en termes d'adhérence sur sol mouillé et de résistance au roulement.

Les pneumatiques de l'invention sont particulièrement destinés à équiper des véhicules à moteur de type tourisme, SUV *("Sport Utility Vehicles"),* deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

### I - MESURES ET TESTS UTILISES

Les compositions de caoutchouc sont caractérisées, avant et après cuisson, comme indiqué ci-après.

### I.1 - Dureté shore A

La dureté shore A des compositions après cuisson est appréciée conformément à la norme ASTM D 2240-86.

### I.2 - Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température, sous une contrainte fixe de 0,7 MPa, on enregistre la valeur de tan δ observée à - 10°C (soit tan(δ)-_{10°C}) et la valeur de tan δ observée à 40°C (soit tan(δ)40_{°C}).

On rappelle que, de manière bien connue de l'homme du métier, la valeur de tan(δ)_{-10°C} est représentative du potentiel d'adhérence sur sol mouillé : plus tan(δ)_{-10°C} est élevée, meilleure est l'adhérence. La valeur de tan(δ)_{40°C} est représentative de l'hystérèse du matériau donc de la résistance au roulement : plus tan(δ)_{40°C} est faible, plus la résistance au roulement est réduite.

### I.3 - Essais sur pneumatiques

### A) Adhérence sur sol humide

Pour apprécier les performances d'adhérence sur sol humide, on analyse le comportement des pneumatiques montés sur un véhicule automobile de marque Ford et de modèle Focus, parcourant sous des conditions de vitesse limite, un circuit fortement virageux et arrosé de manière à maintenir le sol humide. On mesure le temps minimal nécessaire pour parcourir la totalité du circuit ; une valeur supérieure à celle du témoin, arbitrairement fixée à 100, indique un résultat amélioré c'est-à-dire un temps de parcours plus court.

### B) Freinage sur sol humide, avec un système ABS

Les pneumatiques sont montés sur un véhicule automobile de marque Renault et de modèle Mégane 1.6 RTE, équipé d'un système de freinage ABS et la distance nécessaire pour passer de 50 km/h à 10 km/h est mesurée lors d'un freinage brutal sur sol arrosé (béton bitumineux). Une valeur supérieure à celle du témoin, arbitrairement fixée à 100, indique un résultat amélioré, c'est-à-dire une distance de freinage plus courte.

### C) Freinage sur sol sec, avec un système ABS

Les pneumatiques sont montés sur un véhicule automobile de marque Renault et de modèle Mégane 1.6 RTE, équipé d'un système de freinage ABS et on mesure la distance nécessaire pour passer de 100 Km/h à 0 Km/h lors d'un freinage brutal sur sol sec (béton bitumineux). Un valeur supérieure à celle du témoin, arbitrairement fixée à 100, indique un résultat amélioré c'est-à-dire une distance de freinage plus courte.

### II. CONDITIONS DE REALISATION DE L'INVENTION

Le pneumatique selon l'invention comporte une bande de roulement qui comprend une composition de caoutchouc comportant :
- à titre de premier élastomère diénique, entre 5 et 25 pce d'un terpolymère de styrène-nitrile-butadiène (SNBR) ayant une teneur en monomère nitrile entre 4 et 18 % en poids ;
- un second élastomère diénique, autre que SNBR ;
- une charge renforçante ;
- un plastifiant liquide dont la température de transition vitreuse (Tg) est inférieure à -20 °C.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II.1- Terpolymère SNBR

La bande de roulement du pneumatique conforme à l'invention a pour première caractéristique essentielle de comporter entre 5 et 25 pce de SNBR ayant une teneur en monomère nitrile entre 4 et 18 % en poids.

Le SNBR est utilisé à un taux compris entre 5 et 25 pce. En dessous de 5 pce, l'effet visé est insuffisant alors qu'au-delà de 25 pce, la matrice devient trop rigide ce qui peut pénaliser finalement les propriétés d'adhérence. Pour ces raisons, le taux de SNBR est plus préférentiellement inférieur à 20 pce, encore plus préférentiellement compris entre 5 et 18 pce.

Les élastomères SNBR sont bien connus. Ils ont été notamment décrits, ainsi que leur application en bandes de roulement de pneumatiques, dans les documents précités EP 0 366 915, EP 0 537 040 ou US 5 225 479, EP 0 736 399 ou US 5 859 115.

Les monomères de butadiène qui conviennent sont en particulier : le butadiène 1,3, 2,3-diméthyl-1,3-butadiène, le 2-méthyl-1,3-butadiène, le 2-éthyl-1,3-butadiène, le 2-phényl-1,3-butadiène, ou les mélanges de ces diènes. Parmi ces diènes conjugués sont utilisés de préférence le butadiène 1,3, le 2-méthyl-1,3-butadiène et en particulier le butadiène 1,3.

Les monomères de styrène qui peuvent être utilisés sont ceux qui contiennent 8 à 16 atomes de carbone dans la molécule, tels que le styrène, l'α-méthylstyrène, le 2-méthyl-styrène, le 3-méthyl-styrène, le 4-méthyl-styrène, le 4-cyclohexyl-styrène, le 4-p-toluène-styrène, p-chloro-styrène, le p-bromo-styrène, le 4-tert-butylstyrène, ou les mélanges de ces composés, parmi lesquels le styrène est préféré.

Les monomères de nitrile sont par exemple, l'acrylonitrile, le méthacrylonitrile, l'éthylacrylonitrile, le crotononitrile, le 2-pentenonitrile ou les mélanges de des composés, parmi lesquels l'acrylonitrile est préféré.

Selon un mode préférentiel de réalisation de l'invention, le SNBR possède une teneur en monomère nitrile comprise entre 5 et 15 % en poids.

Selon un autre mode de réalisation préférentiel, le SNBR a une température de transition vitreuse (Tg) comprise dans le domaine de température de 0°C à -60 °C, plus préférentiellement dans le domaine de -5 °C à -50°C. La Tg peut être notamment ajustée sur un grand domaine de température, grâce aux quantités de styrène et/ou butadiène présentes dans le terpolymère.

Les SNBR décrits précédemment sont disponibles commercialement, notamment vendus par la société Lanxess sous la dénomination « Krynac VP KA 8683 », produit comportant environ 10% en poids d'acrylonitrile, dont la température de transition vitreuse est de -34°C.

### II.2 - Second élastomère diénique

Par élastomère ou caoutchouc "diénique", on rappelle ici que doit être compris de manière connue un élastomère issu au moins en partie (i.e., un homopolymère ou un copolymère) de monomères diènes (monomères porteurs de deux doubles liaisons carbone-carbone, conjuguées ou non).

Le second élastomère diénique de la composition de la bande de roulement du pneumatique conforme à l'invention est choisi préférentiellement dans le groupe des élastomères diéniques fortement insaturés constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un mode particulier de réalisation de l'invention, la composition de caoutchouc comprend un taux de SBR compris entre 75 et 95 pce, préférentiellement entre 80 et 95 pce et plus préférentiellement entre 85 et 95 pce (à vérifier).

Selon un autre mode de réalisation particulier, l'élastomère diénique est majoritairement (pour plus de 50 pce) un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre ―110°C et -80°C, plus préférentiellement entre ―105°C et ―90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

### II.3 - Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" *("non-black filler")* par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (―OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (VIII) suivante:
(VIII) Z - A - Sₓ - A - Z , dans laquelle:
   - x est un entier de 2 à 8 (de préférence de 2 à 5) ;
   - A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
   - Z répond à l'une des formules ci-après: 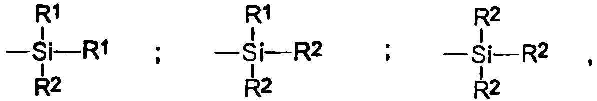
   dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (VIII) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]_{2.} On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule VIII ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc du pneumatique conforme à l'invention, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.4 ― Plastifiant liquide à basse Tg

La composition de caoutchouc de la bande de roulement du pneumatique de l'invention a pour autre caractéristique essentielle de comporter un agent plastifiant liquide (à 23°C) (dit "à basse Tg") dont la Tg est par définition inférieure à -20°C, de préférence inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. Conviennent particulièrement les plastifiants liquides choisis dans le groupe constitué par les huiles naphténiques, notamment hydrogénées, les huiles paraffiniques, les huiles MES, les huiles TDAE, les plastifiants esters, les plastifiants phosphates et les mélanges de ces composés.

A titre de plastifiants phosphates, on peut citer ceux qui contiennent entre 12 et 30 atomes de carbone, par exemple le trioctyle phosphate. A titre de plastifiants esters, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés.

Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en C₁₈, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

L'homme du métier saura ajuster le taux de plastifiant liquide à basse Tg en fonction des conditions particulières de réalisation de l'invention. Il est préférentiellement compris entre 5 et 80 pce. En dessous du minimum indiqué, l'effet technique visé peut s'avérer insuffisant, alors qu'au-delà de 80 pce on s'expose à une diminution d'adhérence des pneumatiques. Pour ces raisons, le taux de plastifiant liquide à basse Tg est plus préférentiellement compris entre 5 et 40 pce.

Selon un autre mode de réalisation préférentiel, les compositions du pneumatique selon l'invention peuvent comporter aussi, à titre de plastifiant solide (à 23°C), une résine hydrocarbonée présentant une Tg supérieure à +20°C, de préférence supérieure à +30°C, telles que décrites par exemple dans les demandes WO 2005/087859, WO 2006/061064 et WO 2007/017060.

Les résines hydrocarbonées sont des polymères bien connus de l'homme du métier, miscibles donc par nature dans les compositions d'élastomère(s) diénique(s) lorsqu'elles sont qualifiées en outre de "plastifiantes". Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods").* Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une Tg supérieure à 20°C ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

La Tg est mesurée de manière connue par DSC *(Differential Scanning Calorimetry),* selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines. Parmi les résines de copolymères ci-dessus sont préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀). De préférence, le composé vinylaromatique est le monomère minoritaire, exprimé en fraction molaire, dans le copolymère considéré.

Le taux de résine hydrocarbonée est préférentiellement compris entre 5 et 60 pce, notamment entre 5 et 40 pce, plus préférentiellement encore compris entre 10 et 30 pce.

Le taux d'agent plastifiant total (i.e., plastifiant liquide plus, le cas échéant, résine hydrocarbonée solide) est de préférence compris entre 40 et 100 pce, plus préférentiellement compris dans un domaine de 50 à 80 pce.

### II.5 - Additifs divers

Les compositions de caoutchouc des bandes de roulement des pneumatiques conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, d'autres agents plastifiants que ceux précités, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également comporter, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.6 - Préparation des compositions de caoutchouc

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer entre 5 et 25 pce d'un premier élastomère diénique SNBR avec une teneur en monomère nitrile entre 4 et 18 % en poids, au cours d'une première étape (dite "non-productive"), à un second élastomère diénique autre que SNBR, une charge renforçante et un plastifiant liquide de Tg inférieure à -20°C, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (SNBR et second élastomère diénique, plastifiant, charge renforçante et agent de couplage dans le cas d'une charge inorganique), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les pneumatiques précédemment décrits tant à l'état cru (c'est à dire, avant cuisson) qu'à l'état cuit (c'est à dire, après réticulation ou vulcanisation).

### III - EXEMPLES DE REALISATION DE L'INVENTION

### III. 1 -Préparation des compositions

On procède pour les essais qui suivent de la manière suivante : on introduit dans un mélangeur interne (taux de remplissage final : environ 70% en volume), dont la température initiale de cuve est d'environ 60 °C, successivement la charge (silice ou noir de carbone), , l'agent de couplage en présence de silice, les élastomères diéniques (SNBR et second élastomère diénique), la charge renforçante, le plastifiant liquide de Tg inférieure à -20°C, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une bande de roulement.

### III.2 - Essais en pneumatiques

Cet essai démontre l'amélioration, en termes d'adhérence sur sol humide et de résistance au roulement, apportée par trois bandes de roulement de pneumatiques conformes à l'invention, comparativement à une bande de roulement d'un pneumatique témoin.

Pour cela, quatre compositions de caoutchouc ont été préparées comme indiqué précédemment, trois destinées à des bandes de roulement de pneumatiques conformes à l'invention (notées ci-après C.2, C.3 et C.4) et une à une bande de roulement d'un pneumatique non-conforme (témoin noté ci-après C.1).

La composition témoin C.1 est une composition standard pour l'homme du métier, conventionnellement utilisée pour fabriquer des bandes de roulement pour des pneumatiques de véhicules de tourisme, à base de SBR et de BR.

Les compositions C.2, C.3 et C.4 des bandes de roulement des pneumatiques selon l'invention sont à base d'élastomères SBR et SNBR.

Ces quatre compositions ont été testées comme bandes de roulement de pneumatiques pour véhicules de tourisme, selon les tests indiqués dans le paragraphe I.3 qui précède.

Leurs formulations (en pce ou parties en poids pour cent parties d'élastomères, donc y compris SNBR), leurs propriétés mécaniques ainsi que les résultats des tests de roulage des pneumatiques ont été résumés dans les tableaux 1, 2 et 3 annexés.

Les compositions C.2 et C.3 d'une part et C.4 d'autre part, ont été formulées avec respectivement 10 et 20 pce de SNBR.

Les compositions C.2, C.3 et C.4 comprennent des plastifiants liquides de Tg inférieure à -20°C, en quantité sensiblement identique à celle de la composition C.1, quantité toutefois ajustée de manière à maintenir la rigidité (dureté shore A) des compositions à un niveau sensiblement constant, comparativement au témoin C.1.

On note que les compositions des bandes de roulement des pneumatiques selon l'invention présentent des propriétés dynamiques sensiblement améliorées :
- avec d'une part une valeur de tan(δ)ₘₐₓ (à 40°C) qui est légèrement plus faible par rapport à la composition témoin C.1, synonyme d'une hystérèse et donc d'une résistance au roulement réduite ;
- d'autre part et surtout une valeur de tan(δ) à - 10°C des compositions C.2, C.3 et C.4 qui est nettement plus élevée que celle de la composition C.1, indicateur reconnu d'une adhérence améliorée sur sol humide.

Il faut donc en conclure que les améliorations ci-dessus sont obtenues grâce à l'ajout du SNBR spécifique dans les bandes de roulement conformes à l'invention.

Lors du roulage des pneumatiques on constate, en effet, une amélioration très sensible de l'adhérence sur sol humide pour les compositions C.2, C.3 et C.4 des pneumatiques selon l'invention, comparativement à la composition témoin C.1, comme en attestent très clairement les gains de 19 % et 13 % obtenus sur le test d'adhérence sur sol humide (décrit au paragraphe I.3-A). Les compositions C.2, C.3 et C.4 n'apportent par contre aucune amélioration en ce qui concerne le freinage sur sol sec des pneumatiques.

D'autre part, le test d'adhérence sur sol humide est meilleur dans le cas des compositions C.2 et C.3 que dans le cas de la composition C.4. Ainsi, on note de manière inattendue qu'un taux de SNBR compris entre 5 et 15 pce donne de meilleurs résultats, en termes d'adhérence sur sol humide, qu' un taux de 20 pce.

En résumé, les résultats de cet essai démontrent que l'emploi d'un terpolymère SNBR à un taux compris entre 5 et 25 pce, ayant une teneur en monomère nitrile spécifique entre 4 et 18 % en poids, permet d'améliorer de manière notable le compromis résistance au roulement et adhérence sur sol humide de bandes de roulement des pneumatiques selon l'invention.

**Tableau 1**

| Composition n° | C.1 | C.2 | C.3 | C.4 |
|---|---|---|---|---|
| SBR (1) | 70 | 90 | 90 | 80 |
| BR (2) | 30 | - | - | - |
| SNBR (3) | - | 10 | 10 | 20 |
| Charge (4) | 80 | 80 | 80 | 80 |
| Agent de couplage (5) | 6.4 | 6.4 | 6.4 | 6.4 |
| Plastifiant (6) | 15 | - | - | - |
| Plastifiant (7) | - | - | 28 | 28 |
| Plastifiant (8) | - | 28 | - | - |
| Résine (9) | 15 | 5 | 5 | 5 |
| Acide stéarique (10) | 2.0 | 2.0 | 2.0 | 2.0 |
| ZnO (11) | 2.5 | 2.5 | 2.5 | 2.5 |
| Soufre (12) | 1.1 | 1.1 | 1.1 | 1.1 |
| Accélérateur (13) | 2.0 | 2.0 | 2.0 | 2.0 |
| DPG (14) | 1.5 | 1.5 | 1.5 | 1.5 |
| Agent antiozone (15) | 1.9 | 1.9 | 1.9 | 1.9 |

| | | | | |
|---|---|---|---|---|
| (1) SBR solution (taux exprimé en SBR sec) ; 25% de styrène, 58 % de motifs polybutadiène 1-2 et 22% de motifs polybutadiène 1-4 trans (Tg = - 21°C) ; (2) BR avec 4,3% de 1-2 ; 2,7% de trans ; 93% de cis 1-4 (Tg = - 106°C) ; (3) SNBR : Krynac VP KA 8683 de la société Lanxess; (4) silice : « Zeosil 1165 MP » de la société Rhodia, type « HD » - (BET et CTAB : environ 160 m²/g); (5) agent de couplage TESTP (« Si69 » de la société Dégussa) ; (6) huile MES (« Catenex SNR » de la société Shell) ; (7) adipate de di-isodécyle (« Jayflex DIDA » de la société Exxon Mobil) ; (8) trioléate de glycérol (huile de tournesol à 85 % en poids d'acide oléique, « lubrirob Tod 1880 » de la société Novance) ; (9) polylimonène (« Dercolyte L120 de la société DRT) ; (10) stéarine ("Pristerene" de la société Uniquema); (11) oxyde de zinc (grade industriel - société Umicore) ; (12) soufre ; (13) N-cyclohexyl-2-benzothiazyl-sulfénamide (Santocure CBS de la société Flexsys) ; (14) DPG = Diphénylguanidine (« Perkacit DPG » de la société Flexsys) ; (15) N-1,3-diméthylbutyl-N-phénylparaphénylènediamine (Santoflex 6-PPD de la société Flexsys). | | | | |

**Tableau 2**

| Composition n° | C.1 | C.2 | C.3 | C.4 |
|---|---|---|---|---|
| Shore A | 67 | 66 | 68 | 69 |
| Tgδ (- 10 °C) | 0,77 | 0,89 | 0,89 | 0,88 |
| Tgδ (40 °C) | 0,237 | 0,217 | 0,221 | 0,217 |

**Tableau 3**

| Composition n° | C.1 | C.2 | C.3 | C.4 |
|---|---|---|---|---|
| Adhérence sur sol humide (u.r.) | 100 | 119 | 119 | 113 |
| Freinage humide ABS (u.r.) | 100 | 104 | 105 | 104 |
| Freinage sol sec ABS (u.r.) | 100 | 100 | 99 | 98 |

## Revendications

1. Pneumatique comportant une bande de roulement comprenant une composition de caoutchouc comportant au moins :
- à titre de premier élastomère diénique, entre 5 et 25 pce d'un terpolymère de styrène-nitrile-butadiène (SNBR) ayant une teneur en monomère nitrile entre 4 et 18 % en poids ;
- un second élastomère diénique autre que SNBR ;
- une charge renforçante ;
- un plastifiant liquide dont la température de transition vitreuse (Tg) est inférieure à -20 °C.

2. Pneumatique selon la revendication 1, dans lequel le second élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

3. Pneumatique selon la revendication 2, dans lequel le second élastomère diénique est un copolymère de styrène-butadiène (SBR).

4. Pneumatique selon la revendication 3, dans lequel le taux de SBR est compris entre 75 et 95 pce.

5. Pneumatique selon l'une quelconque des revendications 1 à 4, dans lequel le taux de SNBR est inférieur à 20 pce.

6. Pneumatique selon la revendication 5, dans lequel le taux de SNBR est compris entre 5 et 15 pce.

7. Pneumatique selon l'une quelconque des revendications de 1 à 6, dans lequel la teneur en monomère nitrile du SNBR est comprise entre 5 et 15 % en poids.

8. Pneumatique selon l'une quelconque des revendications 1 à 7, dans lequel la charge renforçante comporte du noir de carbone et/ou de la silice.

9. Pneumatique selon l'une quelconque des revendications 1 à 8, dans lequel la quantité de charge renforçante est comprise entre 20 et 200 pce.

10. Pneumatique selon la revendication 9, dans lequel la quantité de charge renforçante est comprise entre 30 et 150 pce.

11. Pneumatique selon l'une quelconque des revendications de 1 à 10, dans lequel le plastifiant liquide de Tg inférieure à -20°C est choisi dans le groupe constitué par les huiles naphténiques, les huiles paraffiniques, les huiles MES, les huiles TDAE, les plastifiants esters, les plastifiants phosphates et les mélanges de ces composés.

12. Pneumatique selon l'une quelconque des revendications 1 à 11, dans lequel la composition de caoutchouc comporte en outre une résine hydrocarbonée dont la Tg est supérieure à 0 °C.

13. Pneumatique selon la revendication 12, dans lequel la résine hydrocarbonée est choisie dans le groupe constitué par les résines d'homopolymères ou copolymère de cyclopentadiène (en abrégé CPD) ou dicyclopentadiène (en abrégé DCPD), les résines d'homopolymère ou copolymère terpène, les résines d'homopolymères ou copolymère de coupe C5, et les mélanges de ces résines.

14. Pneumatique selon l'une quelconque des revendications 1 à 13, dans lequel le monomère nitrile est l'acrylonitrile.

## Claims

1. Tyre having a tread comprising a rubber composition that comprises at least:
- as a first diene elastomer, between 5 and 25 phr of a styrene-nitrile-butadiene terpolymer (SNBR) having a nitrile monomer content between 4 and 18% by weight;
- a second diene elastomer other than SNBR;
- a reinforcing filler ;
- a liquid plasticizer, the glass transition temperature (Tg) of which is below -20°C.

2. Tyre according to Claim 1, in which the second diene elastomer is chosen within the group consisting of polybutadienes, natural rubber, synthetic polyisoprenes, butadiene copolymers, isoprene copolymers and mixtures of these elastomers.

3. Tyre according to Claim 2, in which the second diene elastomer is a styrene-butadiene copolymer (SBR).

4. Tyre according to Claim 3, in which the SBR content is between 75 and 95 phr.

5. Tyre according to any one of Claims 1 to 4, in which the SNBR content is less than 20 phr.

6. Tyre according to Claim 5, in which the SNBR content is between 5 and 15 phr.

7. Tyre according to any one of Claims 1 to 6, in which the nitrile monomer content of the SNBR is between 5 and 15% by weight.

8. Tyre according to any one of Claims 1 to 7, in which the reinforcing filler comprises carbon black and/or silica.

9. Tyre according to any one of Claims 1 to 8, in which the amount of reinforcing filler is between 20 and 200 phr.

10. Tyre according to Claim 9, in which the amount of reinforcing filler is between 30 and 150 phr.

11. Tyre according to any one of Claims 1 to 10, in which the liquid plasticizer having a T_{g} below -20°C is chosen within the group consisting of naphthenic oils, paraffinic oils, MES oils, TDAE oils, ester plasticizers, phosphate plasticizers and mixtures of these compounds.

12. Tyre according to any one of Claims 1 to 11, in which the rubber composition also contains a hydrocarbon resin, the T_{g} of which is above 0°C.

13. Tyre according to Claim 12, in which the hydrocarbon resin is chosen within the group consisting of cyclopentadiene (abbreviated to CPD) or dicyclopentadiene (abbreviated to DCPD) homopolymer or copolymer resins, terpene homopolymer or copolymer resins, C₅ fraction homopolymer or copolymer resins and mixtures of these resins.

14. Tyre according to any one of Claims 1 to 13, in which the nitrile monomer is acrylonitrile.

## Patentansprüche

1. Reifen mit einer Lauffläche, umfassend eine Kautschukzusammensetzung, die mindestens:
- als erstes Dienelastomer zwischen 5 und 25 phr eines Styrol-Nitril-Butadien-Terpolymers (SNBR-Terpolymers) mit einem Nitrilmonomergehalt zwischen 4 und 18 Gew.-%:
- ein zweites Dienelastomer, bei dem es sich nicht um SNBR handelt;
- einen verstärkenden Füllstoff;
- einen flüssigen Weichmacher mit einer Glasübergangstemperatur (Tg) von weniger als -20°C umfasst.

2. Reifen nach Anspruch 1, wobei das zweite Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

3. Reifen nach Anspruch 2, wobei es sich bei dem zweiten Dienelastomer um ein Styrol-Butadien-Copolymer (SBR-Copolymer) handelt.

4. Reifen nach Anspruch 3, wobei der SBR-Gehalt zwischen 75 und 95 phr liegt.

5. Reifen nach einem der Ansprüche 1 bis 4, wobei der SNBR-Gehalt kleiner als 20 phr ist.

6. Reifen nach Anspruch 5, wobei der SNBR-Gehalt zwischen 5 und 15 phr liegt.

7. Reifen nach einem der Ansprüche 1 bis 6, wobei der Nitrilmonomergehalt des SNBR zwischen 5 und 15 Gew.-% liegt.

8. Reifen nach einem der Ansprüche 1 bis 7, wobei der verstärkende Füllstoff Ruß und/oder Kieselsäure umfasst.

9. Reifen nach einem der Ansprüche 1 bis 8, wobei die Menge an verstärkendem Füllstoff zwischen 20 und 200 phr liegt.

10. Reifen nach Anspruch 9, wobei die Menge an verstärkendem Füllstoff zwischen 30 und 150 phr liegt.

11. Reifen nach einem der Ansprüche 1 bis 10, wobei der flüssige Weichmacher mit einer Tg von weniger als -20°C aus der Gruppe bestehend aus napthenischen Ölen, Paraffinölen, MES-Ölen, TDAE-Ölen, Ester-Weichmachern, Phosphat-Weichmachern und Mischungen dieser Verbindungen ausgewählt ist.

12. Reifen nach einem der Ansprüche 1 bis 11, wobei die Kautschukzusammensetzung außerdem ein Kohlenwasserstoffharz mit einer Tg von mehr als 0°C umfasst.

13. Reifen nach Anspruch 12, wobei das Kohlenwasserstoffharz aus der Gruppe bestehend aus Homopolymer- oder Copolymerharzen von Cyclopentadien (abgekürzt CPD) oder Dicyclopentadien (abgekürzt DCPD), Terpen-Homopolymer- oder -Copolymerharzen, C₅-Schnitt-Homopolymer- oder -Copolymerharzen und Mischungen dieser Harze ausgewählt ist.

14. Reifen nach einem der Ansprüche 1 bis 13, wobei es sich bei dem Nitrilmonomer um Acrylnitril handelt.
